# EUROPEAN PATENT APPLICATION

(11) **EP 0 661 335 A1**
(43) Date of publication of application: **05.07.1995**
(21) Application number: 94309648.7
(22) Date of filing: 21.12.1994
(51) Int. Cl.: C08J 3/24, C08L 83/04

(54) **Organosiloxane compositions capable of curing against acid-containing solder fluxes**

(30) Priority: 27.12.1993 US 172774
(71) Applicant: DOW CORNING CORPORATION, Midland, Michigan 48686-0994 (US)
(72) Inventor: Bilgrien, Carl Joseph, Midland, Michigan (US); Hoag, Carol Anne, Midland, Michigan (US); Wilson, Steven West, Midland, Michigan (US)
(74) Representative: Vandamme, Luc Johan Roger

(57) **Abstract**

Storage stable organosiloxane compositions that cure by a platinum-catalyzed hydrosilation reaction in the presence of solder fluxes and pastes containing carboxylic acids or other compounds reactive with silicon-bonded hydrogen atoms are characterized by the presence in specified concentrations of 1) a chain extender containing two silicon-bonded hydrogen atoms per molecule 2) a crosslinking agent containing at least three silicon bonded hydrogen atoms or alkenyl radicals per molecule, 3) a silane containing at least three alkoxy groups or an alkyl polysilicate and 4) an organotitanate.

## Description

This invention relates to organosiloxane compositions that cure in the presence of solder fluxes and pastes containing materials that are known to interfere with cure by a hydrosilation reaction.

Organosiloxane materials, elastomers, resins and gels, exhibit a number of physical, chemical and electrical properties that make them desirable for use as coatings, encapsulants and potting materials for electronic and electrical components.

In typical applications, curable organosiloxane compositions are applied to substrates such as printed circuit boards to which electronic components such as transistors, integrated circuits and other solid state devices have been attached by soldering. The organosiloxane composition is then cured. In many applications, gels are more desirable than elastomeric or resinous materials based on their low modulus, which allows these materials to expand in response to stresses resulting from heat-induced expansion of the electronic components. If not relieved, these stresses are sufficient to cause breakage of delicate wire bonds and other parts, which can result in malfunction of the component.

Organosiloxane compositions that cure by a hydrosilation reaction are preferred for protection of electrical and electronic circuits because they cure at relatively low temperatures and do not generate objectionable by-products during curing. The curing reaction involves alkenyl radicals such as vinyl and silicon-bonded hydrogen atoms.

One disadvantage of organosiloxane compositions is the ability of silicon-bonded hydrogen atoms to react with water and organic compounds containing hydroxyl groups. These reactions reduce the number of silicon-bonded hydrogen atoms available to cure the organosiloxane composition. In particular, it is often difficult to completely cure organosiloxane compositions using a hydrosilation reaction in the presence of water and organic compounds such as alcohols and carboxylic acids.

A recent trend in the electronics industry has been the elimination of organic solvents formerly used to remove impurities, particularly oils and greases, from printed circuit boards to which solid state integrated circuits and other electronic components are subsequently secured by means of electrically conductive solders. These oils and greases can interfere with the ability of solder fluxes to achieve a proper solder flow and establishment of good electrical contact between the leads or bodies of electronic components and the circuit board.

In many applications, conventional solder fluxes have been replaced by fluxes and solder pastes containing relatively large amounts of carboxylic acids. These acid-containing fluxes and pastes are known as "no-clean" solder fluxes and pastes.

Representative of the prior art is the following patent publications: EP-A 0 471,475; US-A 5,145,933 and US-A 4,340,709.

An objective of this invention is to provide storage stable one-part organosiloxane compositions that will cure by platinum-catalyzed hydrosilation reactions in the presence of "no-clean" solder fluxes and solder pastes containing substantial amounts of carboxylic acids.

As used herein, the term "storage stable" implies that a one-part composition will not cure during storage for seven days at temperatures of up to 40°C. Correspondingly, the term "cure" refers to ability of the present compositions to form a gel or elastomer with substantially no liquid material at the interface between the organosiloxane composition and the acid-containing solder flux or solder paste.

The present invention introduces one-part storage stable organosiloxane compositions that cure by a platinum-catalyzed hydrosilation reaction in the presence of solder fluxes and pastes containing carboxylic acids or other compounds reactive with silicon-bonded hydrogen atoms. Our compositions are characterized by the presence in specified concentrations of 1) a chain extender containing two silicon-bonded hydrogen atoms per molecule 2) a crosslinking agent containing at least three silicon-bonded hydrogen atoms or alkenyl radicals per molecule, 3) an acetylenic alcohol as a catalyst inhibitor, and 4) an alkyl polysilicate or a silane containing four alkoxy groups per molecule or three alkoxy groups and an unsubstituted or substituted monovalent hydrocarbon radical, and 5) an organotitanate. The crosslinking agent contains from 70 to 95 percent of the silicon-bonded hydrogen atoms present in our composition.

The claimed compositions cure uniformly without substantially affecting the extent of curing or the physical properties of the cured material in the area of the solder flux. Our compositions are particularly useful for preparing gels that must remain relatively soft throughout their entire volume for extended periods of time.

This invention provides a curable organosiloxane composition comprising
A) a liquid polyorganosiloxane containing at least two alkenyl radicals per molecule;
B) a chain extender comprising a first organohydrogensiloxane containing two silicon-bonded hydrogen atoms per molecule;
C) a crosslinking agent comprising a second organohydrogen-siloxane containing at least three silicon-bonded hydrogen atoms per molecule, where the second organohydrogensiloxane contains from 70 to 95 mole percent of the silicon-bonded hydrogen atoms present in said composition and the molar ratio of silicon-bonded hydrogen atoms to alkenyl radicals in said composition is from 0.3 to 2;
D) an amount sufficient to promote curing of said composition at a temperature of at least 80°C. of a curing catalyst selected from metals of the platinum group of the periodic table and compounds of said metals;
E) from 0.2 to 1 weight percent, based on the weight of said composition of an adhesion-promoting ingredient selected from silanes exhibiting the general formula (R¹O)ₙSiR²₄₋ₙ and alkyl polysilicates containing repeating units of the general formula (R¹O)₂SiO, where R¹ represents an alkyl or alkoxyalkyl radical, R² represents an unsubstituted or substituted monovalent hydrocarbon radical and n is 3 or 4;
F) from 0.01 to 0.1 weight percent, based on the weight of said composition, of an organotitanium compound; and
G) an amount of an acetylenic alcohol that in combination with said organotitanium compound imparts storage stability to said composition while allowing said composition to cure in less than 60 minutes at a temperature of 120°C.

One of the ingredients responsible for the unique ability of the present compositions to cure and adhere in the presence of "no clean" solder fluxes and pastes is ingredient E, a silane containing three or four alkoxy groups per molecule or an alkyl polysilicate. Silanes containing four alkoxy groups per molecule are also known as alkyl orthosilicates.

The alkoxy-functional silanes are represented by the formula (R¹O)ₙSiR²₄₋ₙ and the useful alkyl polysilicates contain the repeating unit (R¹O)₂SiO. In these formulae R¹ represents an alkyl or alkoxyalkyl radical, R² represents an unsubstituted or substituted monovalent hydrocarbon radical and n is 3 or 4.

The alkyl radical represented by R¹ preferably contains from 1 to 4 carbon atoms and is most preferably methyl or ethyl. R¹ can also represent an alkoxyalkyl radical such as methoxyethyl.

The hydrocarbon radical represented by R² can be alkyl such as methyl, perfluoroalkylethyl such as 3,3,3-trifluoropropyl, cycloalkyl such as cyclohexyl, aryl such as phenyl, alkaryl such as tolyl or aralkyl such as benzyl. The substituent present on the hydrocarbon radical represented by R² can be an organofunctional group such as epoxy, so long as this group does not interfere with curing or adhesion of our organosiloxane composition in the presence of the solder flux or paste or decrease its storage stability below our standard of 7 days at temperatures of up to 40°C.

R² is preferably alkyl containing from 1 to 4 carbon atoms, 3,3,3-trifluoropropyl or phenyl and, most preferably, methyl.

When used in our specified amounts, the alkoxy-substituted silane or alkyl polysilicate improves the adhesion of the organosiloxane composition to the substrate, including the acid-containing solder flux, without interfering with curing of the composition.

The adhesion-promoting ingredient constitutes from 0.2 to 1 weight percent of the curable organosiloxane composition. Concentrations above 1 percent of the polysilicate appear to interfere with curing of the organosiloxane composition in the presence of acid containing solder fluxes and pastes.

In addition to catalyzing hydrolysis of the adhesion promoting ingredient, our organotitanium compound, ingredient F, interacts with the platinum catalyst inhibitor to increase the storage stability of our organosiloxane composition. This effect cannot be achieved using our selected catalyst inhibitor without adversely affecting the ability to cure in the presence of an acid-containing solder flux or paste.

This organotitanium compound can be any of those known to catalyze the moisture-initiated hydrolysis of siloxanes and silanes containing alkoxy or other hydrolyzable groups. Useful titanium compounds are titanium naphthenate, titanium esters such as tetrabutyl titanate, tetra-2-ethylhexyl titanate, tetraphenyl titanate and triethanolamine titanate; organosiloxytitanium compounds of US-A 3,294,739 and beta-dicarbonyl titanium compounds of US-A 3,334,067. Preferred compounds include tetraalkyl titanates such as tetrabutyl titanate, tetraisopropyl titanate and beta-dicarbonyl titanium compounds such as bis(acetylacetonyl)diisopropyltitanium and 2,5-diisopropoxy-bis-ethylacetoacetate titanium.

The organotitanium compound constitutes from 0.01 to 0.1 percent by weight of our curable compositions. In preferred compositions, the concentration of organotitanium compound should not exceed 0.04 weight percent. Below 0.01 percent the beneficial effect of the organotitanium compound in prolonging storage stability of our compositions is not apparent, while above the upper limit the compositions lose their ability to cure at 120°C. in less than 60 minutes following storage for 7 days at temperatures of up to 40°C.

The liquid polyorganosiloxane, ingredient A of the curable organosiloxane compositions of this invention, is the principal ingredient of these compositions. This ingredient contains at least two silicon-bonded alkenyl radicals in each molecule. Suitable alkenyl radicals contain from 1 to 10 carbon atoms and are exemplified by vinyl, allyl and 5-hexenyl. The silicon-bonded organic groups other than alkenyl radicals present in ingredient A are typically monovalent hydrocarbon and halogenated hydrocarbon radicals and include alkyl radicals such as methyl, ethyl and propyl; aryl radicals such as phenyl; and halogenated alkyl radicals such as 3,3,3-trifluoropropyl.

The molecular structure of ingredient A is typically linear, however, there can be some branching due to the presence of trivalent siloxane units within the molecule. To achieve a useful level of physical properties in the elastomers and gels prepared by curing of our compositions, the molecular weight of this ingredient should be sufficient to achieve a viscosity at 25°C. greater than 0.1 Pa·s. The upper limit for the molecular weight of ingredient A is not specifically restricted and is typically limited only by the processability of the curable organosiloxane composition.

Preferred embodiments of ingredient A are polydiorganosiloxanes containing alkenyl radicals at the two terminal positions and are represented by the general formula I 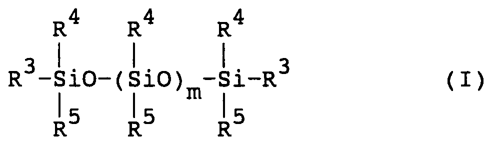
where each R³ is a vinyl or other alkenyl radical, R⁴ and R⁵ do not contain ethylenic unsaturation and are individually selected from monovalent saturated and aromatic hydrocarbon radicals and monovalent saturated and aromatic halohydrocarbon radicals and m represents a degree of polymerization equivalent to a viscosity of at least 100 centipoise (0.1 Pa·s), preferably from 0.1 to 10 Pa·s. The hydrocarbon radicals represented by R⁴ and R⁵ can be unsubstituted or substituted with groups such as halogen atoms that do not interfere with curing of our compositions.

The substituents represented by R⁴ and R⁵ can be identical or different and contain from 1 to 20 carbon atoms. A range from 1 to 10 carbon atoms is preferred based on the availability of the corresponding monomers. Most preferably at least one of the hydrocarbon radicals on each silicon atom is methyl and any remainder are phenyl and/or 3,3,3-trifluoropropyl. This preference is based on the availability of the reactants typically used to prepare the polydiorganosiloxane and the desired properties for the cured elastomers prepared from these polydiorganosiloxanes. For these reasons, R³ preferably contains from 2 to 10 carbon atoms and is most preferably vinyl or 5-hexenyl.

Representative embodiments of ingredient A containing ethylenically unsaturated hydrocarbon radicals only at the terminal positions are dimethylvinylsiloxy-terminated polydimethylsiloxanes, dimethylvinylsiloxy-terminated polymethyl-3,3,3-trifluoropropylsiloxanes, dimethylvinylsiloxy-terminated dimethylsiloxane/3,3,3-trifluoropropylmethylsiloxane copolymers and dimethylvinylsiloxy-terminated dimethylsiloxane/methylphenylsiloxane copolymers.

Methods for preparing ingredient A of the present compositions by hydrolysis and condensation of the corresponding halosilanes or by condensation of the cyclic diorganosiloxanes are sufficiently disclosed in the patent and other literature that a detailed description in this specification is not necessary.

The present compositions also contain the presence of two types of organohydrogensiloxanes. One contains two silicon-bonded hydrogen atoms per molecule and is ingredient B or a chain extender. The second organohydrogensiloxane contains at least three silicon-bonded hydrogen atoms per molecule and is ingredient C or the crosslinking agent.

The hydrogen atoms of the chain extender are preferably bonded to terminal silicon atoms of the polyorganosiloxane molecule.

The function of the chain extender compensates for any silicon bonded hydrogen atoms lost by reaction with the carboxylic acids present in "no-clean" solder fluxes. Because the molar ratio of silicon-bonded hydrogen atoms to vinyl or other ethylenically unsaturated hydrocarbon radical in our compositions is typically 0.5 or less, the loss of even a small percentage of silicon-bonded hydrogen atoms in our crosslinking agent by reaction with the acids present in the solder paste or flux, will adversely affect the ability of our organosiloxane compositions to cure completely. This is particularly true at the interface between the organosiloxane composition and the substrate being coated or encapsulated.

One way to compensate for the loss of silicon-bonded hydrogen atoms available to cure our organosiloxane composition is to add more than the required concentration of crosslinking reactant containing at least three silicon-bonded hydrogen atoms per molecule. If less than the predicted concentration of hydrogen atoms react with flux, this approach can result in excessive hardening of our organosiloxane composition beyond the desired gel-type of product. We have unexpectedly found that this problem can be reduced if the excess silicon-bonded hydrogen is present as an organohydrogensiloxane containing only two silicon-bonded hydrogen atoms per molecule.

Thus, our chain extender contains from 5 to 30 percent of the total silicon-bonded hydrogen atoms present in the curable compositions of this invention.

The chain extender reacts with the terminal alkenyl radicals of ingredient A, thereby linking two or more molecules of that ingredient together, increasing its effective molecular weight and lengthening the distance between potential crosslinking sites. This has the added beneficial effect of allowing the initial viscosity of our curable composition to be reduced.

When the chain extender is a disiloxane it is represented by the formula (R⁶₂HSi)₂O.

Preferred polyorganosiloxanes that can be used as chain extenders contain terminal units of the formula HR⁶₂SiO_{1/2} and non-terminal organosiloxane units of the formula R⁷₂SiO. In these formulae R⁶ and R⁷ represent unsubstituted or substituted monovalent hydrocarbon radicals that are free of ethylenic unsaturation. These hydrocarbon radicals are selected from the same group as R⁴ of ingredient A.

The present compositions contain an organohydrogensiloxane containing at least three silicon-bonded hydrogen atoms or alkenyl radicals per molecule as the crosslinking agent. In the presence of hydrosilation catalyst, ingredient D, the silicon-bonded hydrogen atoms in ingredients B and C undergo an addition reaction, (a hydrosilation reaction), with the silicon-bonded alkenyl groups in ingredient A, resulting in crosslinking and curing of the composition.

The silicon-bonded organic groups present in ingredient C are selected from the same group of monovalent hydrocarbon and halogenated hydrocarbon radicals as the organic groups of ingredient A. The molecular structure of ingredient C can be straight chain, branch-containing straight chain, cyclic or network. The repeating units of the crosslinking agent can exhibit the formula R⁸ₐSiO_{4-a/2}, where each R⁸ is individually selected from hydrogen and unsubstituted or substituted monovalent hydrocarbon radicals selected from the same group as R⁶ and a is 0, 1, 2 or 3.

It should be understood that combinations of siloxane units containing different values of a can be present and that one of the R⁸ substituents represents hydrogen or alkenyl in at least 3 units of each molecule of crosslinking agent. Units wherein a is 0 can constitute up to 50 mole percent of the units present in the curing agent.

While the molecular weight of ingredient C is not specifically restricted, viscosities in the range of 0.5 to 2 Pa·s at 25°C. are preferred.

The concentration of ingredient C is sufficient to provide the degree of crosslinking required to cure the organosiloxane composition to the desired hardness. The total quantity of silicon-bonded hydrogen atoms contributed by the crosslinker is such that the molar ratio of silicon bonded hydrogen atoms contributed by both the crosslinker and the chain extender to the vinyl or other alkenyl radicals present in the compositions of this invention is from 0.4 to 1.2. Moreover, the chain extender contributes at least 5 percent of all the silicon-bonded hydrogen atoms. The preferred range for this percentage will be determined at least in part by the desired hardness of the cured material, the presence or absence of a filler in the curable composition and the molecular weight of ingredient A.

Curing of our compositions is accomplished by the presence of a hydrosilation catalyst that is a metal from the platinum group of the periodic table or a compound of such a metal. These metals include platinum, palladium and rhodium. Platinum and palladium compounds are preferred based on the high activity level of these catalysts in hydrosilation reactions.

Examples of preferred curing catalysts are platinum black, platinum metal on various solid supports, chloroplatinic acid, alcohol solutions of chloroplatinic acid and coordination complexes of either platinic chloride or chloroplatinic acid with liquid ethylenically unsaturated compounds such as olefins and organosiloxanes containing ethylenically unsaturated hydrocarbon radicals bonded to silicon. Complexes of chloroplatinic acid with organosiloxanes containing ethylenically unsaturated hydrocarbon radicals are described in US-A 3,419,593.

The concentration of ingredient D in our compositions is equivalent to a platinum concentration of from 0.1 to 500 parts by weight of platinum group metal, preferably from 1 to 50 parts by weight of platinum group metal, per million parts (ppm), based on the combined weight of ingredients A, B and C.

Curing does not proceed satisfactorily at below 0.1 ppm of platinum group metal while using more than 500 ppm results in no appreciable increase in cure rate and is therefore uneconomical.

Mixtures of the aforementioned ingredients A, B, C and D will begin to cure at ambient temperature. Because the present compositions are packaged in a single container to obtain a suitable storage time, typically at least one month, the activity of the catalyst under ambient conditions, typically 25°C., must be retarded or suppressed by the addition of a suitable inhibitor.

Suitable platinum catalyst inhibitors for use with our compositions are the acetylenic alcohols disclosed in US-A 3,445,420. Moderately volatile acetylenic alcohols containing more than four carbon atoms are preferred. In combination with the organotitanium compounds of our compositions, these alcohols suppress the activity of a hydrosilation catalyst under ambient conditions, typically from 25 to 40°C., for at least one week without interfering with curing of the composition at temperatures above 80°C. in the presence of no-clean solder fluxes.

Inhibitor concentrations as low as one mole of inhibitor per mole of platinum group metal will in some instances impart satisfactory storage stability to preferred compositions, while allowing the composition to at least partially cure before a substantial amount of the solder flux has melted. The optimum concentration for a given inhibitor in a given composition can readily be determined by routine experimentation and does not constitute a part of this invention.

If longer storage times are required than can be achieved using acetylenic alcohols as catalyst inhibitors, additional inhibitors can be added or the ingredients of our curable composition can be packaged in two or more containers, with the hydrosilation catalyst and the organohydrogensiloxane being present in separate containers. The contents of the containers are combined when it is desired to cure the composition within the storage time that can be achieved using the present inhibitors.

Catalyst inhibitors other than acetylenic alcohols that can be added to the present compositions to increase storage stability include amines, particularly the N,N,N'N'-tetraalkylalkylene diamines such as N,N,N'N'-tetramethylethylene diamine. The amines are typically more powerful inhibitors than the acetylenic alcohols and their concentration ranges are therefore proportionately less.

To achieve high levels of tear strength and other physical properties that characterize some types of cured elastomers prepared by the compositions of this invention, it may be desirable to include a reinforcing filler such as finely divided silica. Silica and other reinforcing fillers are often treated with one or more treating agents to prevent a phenomenon referred to as "creping" or "crepe hardening" during processing of the curable composition.

Finely divided forms of silica are preferred reinforcing fillers. Colloidal silicas are particularly preferred because of their relatively high surface area, which is typically at least 50 square meters per gram. Fillers having surface areas of at least 300 square meters per gram are preferred for use in our method. Colloidal silicas can be of the precipitated or fume type. Both types of silica are commercially available.

The amount of finely divided silica or other reinforcing filler used in the present compositions is at least in part determined by the physical properties desired in the cured elastomer. Liquid or pumpable polyorganosiloxane compositions typically contain from 10 to 60 percent by weight of silica, based on the weight of polydiorganosiloxane. This value is preferably from 30 to 50 percent.

The filler treating agent can be any of the low molecular weight organosilicon compounds disclosed in the art as suitable for preventing creping of organosiloxane compositions during processing. The treating agents are typically liquid hydroxyl terminated polydiorganosiloxanes containing an average of from 2 to 20 repeating units per molecule and organosilicon compounds such as hexaorganodisiloxanes and hexaorganodisilazanes that hydrolyze under conditions used to treat the filler to form compounds with silicon-bonded hydroxyl groups. Preferably at least a portion of the silicon bonded hydrocarbon radicals present on the treating agent are identical to a majority of the hydrocarbon radicals present in ingredients A, B and C. A small amount of water can be added together with the silica treating agent(s) as a processing aid.

It is believed that the treating agents function by reacting with silicon-bonded hydroxyl groups present on the surface of the silica or other filler particles to reduce interaction between these particles.

When a silica filler is used, it is preferably treated in the presence of at least a portion of the other ingredients of the present compositions by blending these ingredients together until the filler is completely treated and uniformly dispersed to form a homogeneous material.

The ingredients that are present during treatment of the filler typically include the silica treating agents and at least a portion of the polydiorganosiloxane(s) of ingredient A.

The present organosiloxane compositions can also contain one or more additives that are conventionally present in curable compositions of this type to impart or enhance certain physical properties of the cured composition in addition to adhesion or to facilitate the processing of the curable composition.

Typical additives are non-reinforcing fillers such as quartz, alumina, mica and calcium carbonate; pigments such as carbon black and titanium dioxide; dyes, flame retardants and heat and/or ultraviolet light stabilizers.

When the adhesion promoting ingredient, ingredient B of the present compositions, is an alkoxysilane containing a hydrocarbon radical with a reactive group such as 3-glycidoxypropyl, the composition may require an added catalyst that facilitates reaction of this group. For example, it is known that chelated aluminum compounds such as aluminum acetylacetonate catalyze the reaction of epoxide groups.

Resinous organosiloxane copolymers can be used in place of, or in combination with, one or more reinforcing fillers to improve the physical properties of the cured organosiloxane composition.

A preferred type of resinous copolymer contains repeating units of the general formula SiO_{4/2} in addition to triorganosiloxy units of the general formulae R⁹₃SiO_{1/2} and diorganovinylsiloxy units of the general formula CH₂=CH(R¹⁰)₂SiO_{1/2}. In these formulae R⁹ and R¹⁰ are individually monovalent hydrocarbon or substituted monovalent hydrocarbon radicals as previously defined for the R⁹ radicals of ingredient A.

The molar ratio of the combination of triorganosiloxy units and diorganovinylsiloxy units to SiO_{4/2} units in the resinous copolymer is from 0.7 to 1.2, inclusive. The vinyl-containing units constitute from 2 to 8 percent by weight of the copolymer, which preferably contains at least two vinyl radicals per molecule. In preferred embodiments of the copolymer the ranges for the molar ratio of diorganovinylsiloxy: triorganosiloxy:SiO_{4/2} units is 0.08-0.1 : 0.06-1 : 1.

The compositions of this invention can be prepared by combining all of ingredients at ambient temperature. Any of the mixing techniques and devices described in the prior art can be used for this purpose. The particular device used will be determined by the viscosity of the ingredients and the final curable composition. Suitable mixers are paddle type mixers and kneader type mixers.

Cooling of the ingredients during mixing may be desirable to avoid premature curing of the composition.

The following examples demonstrate the unique combination of storage stability and the ability to cure in the presence of acid-containing solder fluxes and pastes which characterize the curable compositions of this invention. The examples should not be interpreted as limiting the scope of the invention defined in the accompanying claims. Unless otherwise specified, all parts and percentages in the examples are by weight and viscosities were measured at 25°C.

### Example 1

This example demonstrates the effect of the organotitanate ingredient of the present compositions on both storage stability and adhesion to acid-containing solder fluxes.

The curable organosiloxane compositions evaluated contained the following ingredients:

As the alkenyl-substituted polydiorganosiloxane (ingredient A1), 93.86 parts of a dimethylvinylsiloxy-terminated polydimethylsiloxane having a viscosity of 0.4 Pa·s at 25°C.

As the chain extender (ingredient B1), 0.54 parts of a dimethylhydrogensiloxy-terminated polydimethylsiloxane exhibiting a viscosity of 0.01 Pa·s and containing 0.2 weight percent of silicon-bonded hydrogen.

As the crosslinking agent (ingredient C1), 0.9 part of a trimethylsiloxy-terminated polydiorganosiloxane having an average of five methylhydrogensiloxane units and three dimethylsiloxane units per molecule and containing 0.7 to 0.8 weight percent of silicon-bonded hydrogen.

As the hydrosilation catalyst (ingredient D1), 0.14 part of a reaction product of hexachloroplatinic acid and sym-tetramethyldivinyldisiloxane that has been diluted with a liquid dimethylvinylsiloxy-terminated polydimethylsiloxane in an amount sufficient to achieve a platinum content of 0.6 weight percent.

As the catalyst inhibitors (Ingredient G), a mixture of 0.003 part of N,N,N',N'-tetramethylethylenediamine and 0.054 part phenylbutynol (G1) or a specified amount of 3,5-dimethylhexyn-3-ol (G2).

As the adhesion promoter (ingredient E), specified amounts of ethyl polysilicate (EPS) or n-propyl orthosilicate (NPS).

As the organotitanium compound (Ingredient F), tetrabutyl titanate (TBT).

A curable composition (I) of this invention was prepared by blending ingredients A1, B1, C1, D1 and G2 together with 1 part of EPS and 0.1 part of TBT. The storage stability of the composition was evaluated by heating it at 43°C. This composition was still liquid after 67 hours under these conditions.

Test samples were prepared by spreading a layer of an acid-containing "no-clean" type solder paste (390 HRF manufactured by Alpha Metals) on to the surface of an FR-4 type circuit board. The layer was about 2 mm thick. The boards were then heated for two minutes at a temperature of 225°C. to allow the flux portion of the paste to flow over the surface of the substrate. The solder collected in globules.

When the substrate had cooled to room temperature a thin layer of the curable composition was poured over the solder-covered portion of the substrate and cured by heating the substrate for 30 minutes at a temperature of 120°C.

During the heating period the composition cured to a elastomeric gel. A portion of the gel covering the solder was lifted and the gel solder interface was examined. The material at interface between the gel and the solder paste was partially cured and had the consistency of a grease. When the coated board was allowed to remain under ambient conditions for three days and another portion of the interface was examined, the gel at the interface was found to be completely cured.

To evaluate the effect of storage on the ability of the composition I to cure, a 15 g quantity of this material was aged for two days under ambient conditions and then heated at 120°C. The composition did not cure after one hour of heating. The conclusion was that the concentration of organotitanate was sufficiently high that it was interfering with curing of the composition.

A second curable composition (II) was prepared using the same types and quantities of ingredients as I, with the exception that the concentration of EPS was reduced to 0.6 part and the concentration of TBT was reduced to 0.07 part. When cured against a "no-clean" solder paste in the same manner as composition I, the interface between the cured gel and the paste was dry about 16 hours after being removed from the oven.

A freshly prepared fifteen gram quantity of composition II cured within 30 minutes at a temperature of 120°C. After being stored for 4 days, the composition did not cure during a two day exposure to a temperature of 150°C.

A third composition (III) was prepared using the same ingredients as compositions I and II, with the exception that the concentration of NPS was 0.4 part and the concentration of TBT was 0.04 part. When freshly prepared, this composition cured both as a layer over solder flux and in bulk, as did compositions I and II. In addition, after being stored for 6 days at 43°C., composition III cured in 30 minutes at a temperature of 120°C.

A fourth composition (IV) was prepared using the following types and amounts of ingredients:

98.5 parts of A1; 0.54 part of B1; 0.9 part of C1; as the curing catalyst, 0.2 part of a reaction product of platinic chloride and sym-tetramethyldivinyldisiloxane that has been diluted with a liquid dimethylvinylsiloxy terminated polydimethylsiloxane in an amount sufficient to achieve a platinum content of 0.6 weight percent; as the catalyst inhibitor, 0.057 part of 3,5-dimethyl-1-hexyn-3-ol; 0.4 part of EPS and 0.04 part of TBT.

Freshly prepared composition IV cured against an acid-containing "no-clean" solder paste in 30 minutes at 120°C. The composition required 65 hours to cure at 50°C.

The viscosity of freshly prepared composition IV did not change from the initial value of 0.66 Pa·s during storage for 3-1/2 days under ambient conditions. The viscosity increased to 0.70 Pa·s when the composition was stored for seven days in an oven maintained at 43°C. as an accelerated aging test. When heated to 120°C., both aged samples cured well against the "no-clean" solder paste.

For comparative purposes, a composition (V) was prepared using the same types and amounts of ingredients as composition IV with the exception that composition V contained 0.5 part of EPS and no TBT. This composition cured in only 3 1/2 days at a temperature of 43°C.

## Claims

1. A curable organosiloxane composition comprising
A) a liquid polyorganosiloxane containing at least two alkenyl radicals per molecule;
B) a chain extender comprising a first organohydrogensiloxane containing two silicon-bonded hydrogen atoms per molecule, where the first organohydrogensiloxane contains from 5 to 30 mole percent of the silicon-bonded hydrogen atoms present in said composition;
C) a crosslinking agent comprising a second organohydrogensiloxane containing at least three silicon-bonded hydrogen atoms per molecule, where the second organohydrogensiloxane contains from 70 to 95 mole percent of the silicon-bonded hydrogen atoms present in said composition and the molar ratio of silicon-bonded hydrogen atoms to alkenyl radicals in said composition is from 0.3 to 2;
D) a curing catalyst selected from metals from the platinum group of the periodic table and compounds of said metals containing an amount ranging from 0.1 to 500 parts by weight of platinum group metal per million parts of the combined weight of ingredients A-C, to promote curing of said composition at a temperature of at least 80°C.;
E) from 0.2 to 1 weight percent, based on the weight of said composition of an adhesion-promoting ingredient selected from silanes exhibiting the general formula (R¹O)ₙSiR²₄₋ₙ and alkyl polysilicates containing repeating units of the general formula (R¹O)₂SiO, where R¹ represents an alkyl or alkoxyalkyl radical, R² represents an unsubstituted or substituted monovalent hydrocarbon radical and n is 3 or 4;
F) from 0.01 to 0.1 weight percent, based on the weight of said composition, of an organotitanium compound, and
G) from 0.001 to 0.1 weight percent, based on the weight of said composition of an acetylenic alcohol to impart storage stability to said composition in combination with said organotitanium compound while allowing said composition to cure in less than 60 minutes at a temperature of 120°C.

2. The composition according to claim 1 where the organotitanium compound is an alkyl titanate or a beta-dicarbonyltitanium compound; the two terminal units of the chain extender correspond to the formula HR⁶₂SiO_{1/2} and the repeating units correspond to the formula R⁷₂SiO, where R⁶ and R⁷ represent monovalent unsubstituted or substituted hydrocarbon radicals that are free of ethylenic unsaturation; the repeating units of the crosslinking agent correspond to the formula R⁸ₐSiO_{4-a/2}, where each R⁸ is individually selected from hydrogen and monovalent hydrocarbon radicals selected from the same group as R⁶ and a is 0, 1, 2 or 3, with the proviso that units in which a is 0 constitute from 0 to 50 mole percent of the units in said crosslinking agent; the polyorganosiloxane is a polydiorganosiloxane represented by the general formula 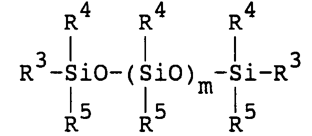 where each R³ represents an alkenyl radical, R⁴ and R⁵ do not contain ethylenic unsaturation and are individually selected from monovalent saturated and aromatic hydrocarbon radicals and monovalent saturated and aromatic halohydrocarbon radicals and m represents a degree of polymerization equivalent to a viscosity of at least 0.1 Pa·s; said catalyst is selected from the group consisting of coordination complexes of platinic chloride and chloroplatinic acid with organosiloxanes containing ethylenically unsaturated hydrocarbon radicals bonded to silicon; and the acetylenic alcohol contains at least 4 carbon atoms.

3. The composition according to claim 2 where R¹ represents an alkyl radical containing from 1 to 4 carbon atoms; R² represents a methyl, phenyl or 3,3,3-trifluoropropyl radical; the concentration of said organotitanium compound does not exceed 0.1 weight percent, based on the weight of said composition; R³ represents a vinyl or a 5-hexenyl radical; R⁴ is methyl and R⁵ is selected from methyl, phenyl and 3,3,3-trifluoropropyl; the viscosity of said polydiorganosiloxane is from 0.1 to 10 Pa·s.; R⁶ and R⁷ contain from 1 to 10 carbon atoms; R⁸ is hydrogen or is selected from the same group as R⁶; the viscosity of said crosslinking agent is from 0.5 to 2 Pa·s; the ethylenically unsaturated hydrocarbon radicals present in said coordination complexes are vinyl radicals; and said composition contains at least one mole of acetylenic alcohol per mole of platinum.

4. The composition according to claim 3 where said organotitanium compound is tetrabutyl titanate; said adhesion-promoting additive is an alkyl polysilicate; R⁶ is methyl; and R⁷ is selected from methyl, phenyl and 3,3,3-trifluoropropyl.

5. The composition according to claim 1 where the product obtained upon curing of said composition is a gel and the molar ratio of silicon-bonded hydrogen atoms to alkenyl radicals present in said composition is from 0.3 to 0.5.

6. The composition according to claim 1 where said composition does not cure during storage for 7 days at temperatures of up to 40°C.; and cures upon heating at a temperature of at least 80°C. to form a gel or an elastomer in the presence of solder fluxes and solder pastes containing carboxylic acids.
